# EUROPEAN PATENT APPLICATION

(11) **EP 4 659 911 A1**
(43) Date of publication of application: **10.12.2025**
(21) Application number: 24772552.6
(22) Date of filing: 01.07.2024
(51) Int. Cl.: B25J 9/00

(54) **PASSIVE ASSIST ARM AND WEARABLE DEVICE**

(30) Priority: 24.04.2024 CN 202410499825
(71) Applicant: Ulsrobotics Co., Ltd., Shanghai 200082 (CN)
(72) Inventor: WANG, Xin, Shanghai 200082 (CN); XU, Zhenhua, Shanghai 200082 (CN)
(74) Representative: Ullrich & Naumann PartG mbB
(86) International application number: PCT/CN2024/102845
(87) International publication number: WO 2025/222619

(57) **Abstract**

The present application relates to the field of exoskeletons, and particularly discloses a passive power-assisted arm and a wearable device, including a supporting portion of main body; a rotary swing arm and an elastic member, the supporting portion of main body, as a main body structure, is respectively connected to a waist and a shoulder of a human body to form support for an overall structure of the power-assisted arm, the rotary swing arm is movably connected to the supporting portion of main body and swings synchronously with an arm of a wearer, the elastic member is disposed in the supporting portion of main body and connected with the rotary swing arm, the elastic member contracts and drags the rotary swing arm to rotate in a direction away from the waist of the human body to provide an assistance, additionally, a tension element is connected to the elastic member, the supporting portion of main body is provided with a lock support for locking the tension element. The magnitude of an elastic force of the elastic member may be adjusted and maintained by pulling and locking the tension element, to achieve the adjustment of the assistance. The present application has the advantages of adjustable assistance, a simple and stable structure, and low implementation costs.

## Description

### TECHNICAL FIELD

The present application relates to the field of exoskeletons, and more particularly, relates to a passive power-assisted arm and a wearable device.

### BACKGROUND ART

At present, in some working scenarios such as in the fields of logistics and warehousing, industrial manufacturing, military industry, and the like, active power-assisted apparatuses have been gradually adopted to reduce the labor burden of workers, alleviate the muscle fatigue and injury of the workers, so as to improve the working efficiency while reducing the occurrence of safety accidents.

However, the active power-assisted apparatuses commonly used at present may not provide an assistance with an adaptive force value according to working contents, a smaller force value provided may not meet the need for the assistance in the actual work, while a larger force value provided is likely to cause some destructive accidents, resulting in the damage to some workpieces, products and other components.

### SUMMARY

In order to facilitate the regulation of the magnitude of an assistance of an active power-assisted apparatus, the present application provides a passive power-assisted arm and a wearable device, which may regulate the magnitude of the assistance according to needs to adapt to different working conditions, and have simple and stable structure and are cost-effective.

In a first aspect, the passive power-assisted arm provided in the present application adopts the following technical solution.

A passive power-assisted arm includes:
a supporting portion of main body;
a connecting member rotationally mounted at the supporting portion of main body, and the connecting member at least comprises a fixed end and an end subjected to elastic force;
a rotary swing arm fixed at the fixed end;
an elastic member, a movable end of the elastic member is connected with the end subjected to elastic force and is configured to pull the rotary swing arm to rotate, and an adjustable end of the elastic member is movably provided on the supporting portion of main body; and
an adjustment and lockout mechanism on the supporting portion of main body, the adjustment and lockout mechanism is configured to adjust and lock a position of the adjustable end of the elastic member on the supporting portion of main body to adjust a magnitude of assistance.

In the above technical solution, the elastic member pulls the connecting member to rotate the rotary swing arm, so as to provide an assistance when a heavy object is lifted by an arm of a human body, thereby reducing the labor burden. The position of the adjustable end of the elastic member on the supporting portion of main body is adjusted by the adjustment and lockout mechanism, so as to change the tension degree of the elastic member, thereby adjusting the magnitude of an elastic force and thus the magnitude of the assistance of the power-assisted arm. Thus, a user may flexibly adjust the adaptive assistance according to different working conditions and scenarios, so as to improve the applicability of the power-assisted apparatus, and to avoid the occurrence of component damage while meeting the need for the assistance.

Optionally, the adjustment and lockout mechanism includes a tension element and a lock support, the tension element is connected with the adjustable end of the elastic member, the tension element has a movable range, over which it pulls the adjustable end of the elastic member to move, so as to move the adjustable end of the elastic member to be away from the movable end of the elastic member, and the lock support is configured to lock a position of the tension element.

By adopting the above technical solution, the tension element is utilized to pull the adjustable end of the elastic member, such that the elastic member may be tensioned, so as to increase the elastic force of the elastic member, thereby increasing the assistance, and meanwhile, the elastic member may maintain the adjusted elastic force in such a way, that the tension element is locked by the elastic member in combination with the lock support, so as to meet the need for assistance. When it is necessary to decrease the assistance, the tension element is loosened by the lock support, so that the elastic member may automatically reset, and after the assistance is adjusted to have a required magnitude, the tension element is locked again. The adjustment structure is simple and stable and easy to operate. Moreover, the wearer may maintain a wearing state of the power-assisted arm, and directly adjust the magnitude of assistance of the power-assisted arm by the tension element, without removing the power-assisted arm, thereby greatly improving the convenience and efficiency of the assistance adjustment.

Optionally, the tension element is a flexible drag rope.

A flexible tension element is less difficult to provide, and thus the assembly difficulty may be reduced while improving the adaptability.

Optionally, the lock support includes a support base and at least one movable part, the support base is mounted on the supporting portion of main body, the movable part is movably arranged on the support base, and the movable part has at least one end surface configured to clamp the tension element in combination with the support base.

By adopting the above technical solution, the tension element is locked by the clamping fit between the movable part and the support base, such that the switch between unlocked state and the locked state is very convenient and quick, easy to operate, and the structure is simple and durable.

Optionally, the end surface is formed with a plurality of protrusions.

A frictional force between the end surface and the tension element may be increased by the protrusions, thereby improving the locking effect.

Optionally, the supporting portion of main body is formed with a first chamber, the adjustable end of the elastic member is disposed in the first chamber, an end of the supporting portion of main body close to the connecting member is formed with an opening, the opening is in communication with the first chamber, and the movable end of the elastic member protrudes out of the opening to be connected with the end subjected to elastic force.

By adopting the above technical solution, the supporting portion of main body may isolate and protect the internal elastic member to prevent the elastic member from being worn, and the outer structure is neat and attractive. Additionally, the supporting portion of main body limits an extension and compression path of the elastic member, thereby avoiding the situations such as winding of the elastic member, and thus improving the stability of the elastic member during extension and compression.

Optionally, the supporting portion of main body is formed with a first chamber, the adjustable end of the elastic member is disposed in the first chamber, an end of the supporting portion of main body close to the connecting member is formed with an opening, the opening is in communication with the first chamber, the movable end of the elastic member protrudes out of the opening to be connected with the end subjected to elastic force, the supporting portion of main body is formed with a throughhole, and the throughhole is in communication with the first chamber, such that the tension element protrudes out of the first chamber.

By adopting the above technical solution, the tension element may protrude out of the throughhole, so as to be grasped by a human hand. The tension element may be pulled to change the position of the adjustable end of the elastic member, so as to adjust the magnitude of the assistance, while the elastic member is kept in the supporting portion of main body without being interfered by the outside, thereby further improving the protection effect on the elastic member, which further improves the durability of the apparatus. Additionally, by means of the flexible rope body, it is easy for the tension element to protrude out of the throughhole, so as to achieve a lower assembly difficulty.

Optionally, the supporting portion of main body is rotatably provided with at least one limit roller at the opening, when the movable end of the elastic member deviates from the supporting portion of main body, the elastic member abuts against an outer circumference of the limit roller.

By adopting the above technical solution, the limit roller limits the extension, compression and swing of the elastic member, so as to improve the stability of the elastic member while avoiding the wear of the elastic member generated by the contact thereof with a hollow rod body, thereby improving the durability.

In a second aspect, a wearable device provided in the present application adopts the following technical solution.

A wearable device includes a waistband, a backband and the passive power-assisted arm above mentioned, the backband is connected with the waistband, the backband is configured to be worn at a shoulder of a human body while the waistband is configured to be wrapped around a waist of the human body, the wearable device further includes an extension rod and an adjustment bracket, the adjustment bracket is fixed at the supporting portion of main body, the extension rod extends through the adjustment bracket, wherein one end of the extension rod is fixed at the waistband while the other end thereof is inserted into the supporting portion of main body, the adjustment bracket is provided with a lock screw for locking a position of the extension rod, and an end of the supporting portion of main body away from the extension rod is fixed at the backband.

By adopting the above technical solution, the distance between the rotary swing arm and the waistband may be adjusted by adjusting the extension length of the extension rod, so as to match wearers of different physique, thereby improving the adaptability of the wearable device.

Optionally, an end of the lock screw close to the extension rod is provided with a lock block, the lock block abuts against the extension rod, and the lock screw is configured to move the lock block to be close to or away from the extension rod.

Through the fit between the lock screw and the lock block, the switch between the unlocked state and the locked state of the extension rod may be quickly achieved, so as to obtain a convenient use, thereby effective improving the efficiency of adjustment.

In summary, the present application includes at least one of the following beneficial technical effects:
1. The elastic member pulls the connecting member to rotate the rotary swing arm, so as to provide an assistance when a heavy object is lifted by an arm of a human body, thereby reducing the labor burden. The position of the adjustable end of the elastic member on the supporting portion of main body is adjusted by the adjustment and lockout mechanism, so as to change the tension degree of the elastic member, thereby adjusting the magnitude of an elastic force and thus the magnitude of the assistance of the power-assisted arm. Thus, a user may flexibly adjust the adaptive assistance according to different working conditions and scenarios, so as to improve the applicability of the power-assisted apparatus, and to avoid the occurrence of component damage while meeting the need for the assistance.
2. The tension element is utilized to pull the adjustable end of the elastic member, such that the elastic member may be tensioned, so as to increase the elastic force of the elastic member, thereby increasing the assistance, and meanwhile, the elastic member may maintain the adjusted elastic force in such a way, that the tension element is locked by the elastic member in combination with the lock support, so as to meet the need for the assistance. When it is necessary to decrease the assistance, the tension element is loosened by the lock support, so that the elastic member may automatically reset, and after the assistance is adjusted to have a required magnitude, the tension element is locked again. The adjustment structure is simple and stable and easy to operate.
3. The supporting portion of main body may isolate and protect the internal elastic member to prevent the elastic member from being worn, and an outer structure is neat and attractive. Additionally, the supporting portion of main body limits an extension and compression path of the elastic member, thereby avoiding the situations such as winding of the elastic member, and thus improving the stability of the elastic member during extension and compression.

### BRIEF DESCRIPTION OF THE DRAWINGS

FIG. 1 is a schematic diagram for separately showing an overall structure of a passive power-assisted arm according to an embodiment of the present application;
FIG. 2 is a semi-sectional diagram of FIG. 1;
FIG. 3 is a schematic diagram for showing an opening according to an embodiment of the present application;
FIG. 4 is a schematic diagram of an overall structure according to an embodiment of the present application; and
FIG. 5 is a schematic diagram for showing an adjustment bracket according to an example of the present application.

### DETAILED DESCRIPTION

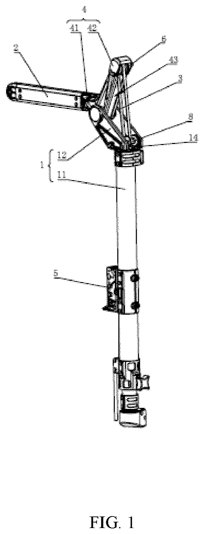

The present application is described in further detail below with reference to FIG. 1 to FIG. 3.

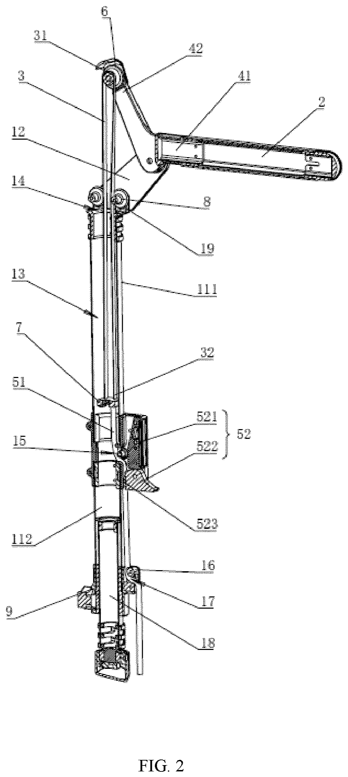

An embodiment of the present application discloses a passive power-assisted arm, with reference to FIG. 1 and FIG. 2, the passive power-assisted arm includes a supporting portion of main body 1, a rotary swing arm 2, an elastic member 3 and a connecting member 4. The supporting portion of main body 1, as a main body structure, may be connected to a waist and/or a shoulder of a wearer, to support an overall structure of the power-assisted arm. Additionally, the supporting portion of main body 1 at least has one end or one bump positioned on the shoulder of the wearer, to serve as a hinge point for mounting the connecting member 4. The connecting member 4 may rotate around the hinge point relative to the supporting portion of main body 1. The connecting member 4 is respectively connected to the rotary swing arm 2 and the elastic member 3. The rotary swing arm 2 is bound to an arm of a user, and the elastic member 3 is provided at the supporting portion of main body 1 and acts on the connecting member 4.

When the user wears the passive power-assisted arm to lift a heavy object, the arm of the user swings downwards to grasp the heavy object. During the swinging, the rotary swing arm 2 moves along to pull the connecting member 4 to rotate around the hinge point, at this moment, the elastic member 3 is stretched and tensioned. The user lifts up the heavy object, so that the rotary swing arm 2 lifts, and at this moment, the elastic member 3 starts to contract by virtue of its own elasticity. The contraction force acts on the connecting member 4, so that the connecting member 4 is subjected to a rotation force, which may drive the rotary swing arm 2 to lift, so as to assist the user in lifting heavy object.

Specifically, with reference to FIG. 1 and FIG. 2, the connecting member 4 at least has one fixed end 41 and one end subjected to elastic force 42. The fixed end 41 and the end subjected to elastic force 42 extend from the body of the connecting member 4 in two directions with the hinge point as an origin point, and an included angle between the extending directions of the fixed end 41 and the end subjected to elastic force 42 is an obtuse angle. The fixed end 41 is fixed at the rotary swing arm 2, and the end subjected to elastic force 42 is connected to the elastic member 3. In use, the contraction force of the elastic member 3 acts on the end subjected to elastic force 42, so as to pull the connecting member 4 to rotate as a whole, which provides a torsion force to the fixed end 41, to drive the rotary swing arm 2 to lift, so as to provide the assistance to the wearer.

In the present embodiment, the connecting member 4 is of an integrally formed structure as a whole to enhance the strength of the overall structure. Moreover, a surface of the connecting member 4 is provided with a hollow structure, so as to obtain a light structure and save materials.

Preferably, the connecting member 4 is provided with a plug-in section at the fixed end 41, the end of the rotary swing arm 2 is correspondingly configured with an accommodation groove, the plug-in section is in plug-in connection with the accommodation groove, to assemble the connecting member 4 and the rotary swing arm 2 together, and the both are further fixed by a bolt.

Further, with reference to FIG. 1 and FIG. 2, the elastic member 3 at least has one movable end 31 connected to the end subjected to elastic force 42 of the connecting member 4, and an adjustable end 32 movably disposed at the supporting portion of main body 1, while the supporting portion of main body 1 is provided with an adjustment and lockout mechanism 5 for adjusting and locking the position of the adjustable end 32 of the elastic member 3 at the supporting portion of main body 1. The adjustment and lockout mechanism 5 is configured to move the adjustable end 32 of the elastic member 3 to be close to or away from the hinge point of the connecting member 4, so as to change the level of stretch of the elastic member 3 during the rotation of the connecting member 4, thereby adjusting the magnitude of the elastic force of the elastic member 3, to change the magnitude of the assistance of the power-assisted arm.

In the present embodiment, the elastic member 3 is preferably an elastic band. The elastic band is characterized in the light weight and durability, and the like. In addition, the elastic band does not generate noise and has less vibration during the extension and compression. Additionally, the elastic band has a good flexibility, is convenient and quick to mount, and may maintain the elastic force even if certain bending occurs.

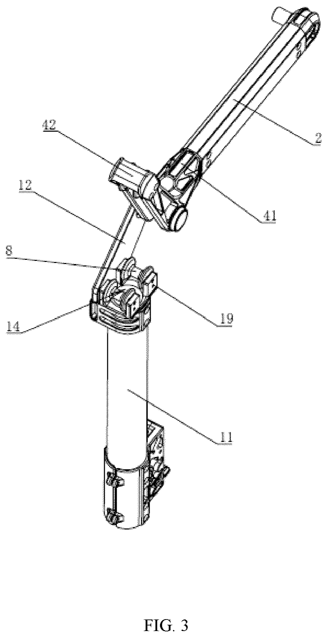

With reference to FIG. 2 and FIG. 3, the supporting portion of main body 1 includes a hollow rod body 11 and two extension plates 12. One end of the hollow rod body 11 is positioned at the shoulder of the human body, and the other end of the hollow rod body 11 is positioned at the waist of the human body. The end of the hollow rod body 11 at the shoulder of the human body extends in a direction away from the other end to form four mounting plates 19, the plate surfaces of every two of the four mounting plates 19 are opposite to each other, every two of the four mounting plates 19 are coplanar with each other, two coplanar mounting plates 19 form a mounting surface for mounting the extension plate 12, and the two extension plates 12 are respectively mounted on the two mounting surfaces.

Meanwhile, the two extension plates 12 extend in a direction close to a shoulder joint of the human body, and the connecting member 4 is hinged between ends of the two extension plates 12 away from the hollow rod body 11, so that the hinge point of the connecting member 4 is closer to the shoulder joint of the human body, so as to improve the adaptability of the rotary swing arm 2 when rotating synchronously with the arm of the human body. In addition, the elastic member 3 is disposed at the hollow rod body 11, and the extension plates 12 is so provided, that the hinge point of the connecting member 4 is away from the elastic member 3, so as to increase the moment applied by the elastic member 3 and improve the effect of assistance.

Further, with reference to FIG. 2 and FIG. 3, the hollow rod body 11 is internally configured with a first chamber 13, an end of the hollow rod body 11 close to the mounting plate 19 is formed with an opening 14, and the opening 14 is in communication with the first chamber 13. The adjustable end 32 of the elastic member 3 is slidably disposed in the first chamber 13 and connected to the adjustment and lockout mechanism 5, and the movable end 31 of the elastic member 3 protrudes out of the opening 14 and is connected to the end subjected to elastic force 42 of the connecting member 4. The hollow rod body 11 may isolate and protect the elastic member 3, thereby preventing the elastic member 3 from being worn during use due to exposure, or preventing the use of the elastic member 3 from being affected due to hooking of other structures, and enabling the external structure to be neat and attractive. Meanwhile, an inner wall of the first chamber 13 may limit the extension and compression path of the elastic member 3, thereby avoiding the situations such as winding of the elastic member 3, and thus improving the stability of the elastic member 3 during repeated extension and compression.

Further, with reference to FIG. 1 and FIG. 3, the connecting member 4 is internally configured with a clearance 43, the clearance 43 extends from the hinge point of the connecting member 4 up to the end subjected to elastic force 42, additionally, the connecting member 4 is provided with a roller for installation 6 at the end subjected to elastic force 42. A band body of the elastic member 3 has two ends A, B, the end A is disposed in the first chamber 13, and the end B passes through the clearance 43 after protruding out of the opening 14, then extends back into the first chamber 13 after bypassing the roller for installation 6, and is connected to the adjustment and lockout mechanism 5 together with the end A.

The band body of the elastic member 3 is U-shaped, the two ends A, B of the band body of the elastic member 3 are disposed together at the supporting portion of main body 1 to form the adjustable end 32 of the elastic member 3, and the section of the band body around the roller for installation 6 forms the movable end 31 of the elastic member 3. The band body of the elastic member 3 surrounds the roller for installation 6, such that it is not necessary to additionally provide a connecting or fixing structure between the elastic member 3 and the connecting member 4, thereby effectively reducing the assembly difficulty between the elastic member 3 and the connecting member 4, which is simple and stable in structure.

In use, the wearer lifts or lowers the arm to move the rotary swing arm 2, so as to rotate the connecting member 4, at this point, the elastic member 3 is synchronously extended or compressed and swings in the clearance 43 close to or away from the hinge point of the connecting member 4, thereby reducing friction between the elastic member 3 and the connecting member 4, and thus reducing wear generated during use of the elastic member 3. Furthermore, two ends of the band body of the elastic member 3 are both hidden inside the hollow rod body 11, so that an exposed portion of the elastic member 3 protruding out of the opening 14 is structurally complete, attractive and neat, and more reliable in structure.

Further, with reference to FIG. 3, the four mounting plates 19 are distributed around the opening 14, a limit roller 8 is rotationally mounted between two mounting plates 19 with opposite plate surfaces, and an axis of the limit roller 8 is parallel to an axis of a hinge shaft of the connecting member 4, the two limit rollers 8 are respectively close to two sides of the opening 14, and the movable end 31 of the elastic member 3 passes between the two limit rollers 8. When the connecting member 4 is rotated to move the movable end 31 of the elastic member 3 to deviate from the axis of the hollow rod body 11, the elastic member 3 abuts against an outer circumference of the corresponding limit roller 8, thereby reducing the wear generated when the elastic member 3 swings, and thus improving the durability of the elastic member 3.

Preferably, the limit roller 8 is I-shaped, namely, the outer circumference of the limit roller 8 is formed with a groove along a circumferential direction, and the elastic member 3 is inserted into the groove when swinging, thereby further limiting the elastic member 3, which improves the stability of the elastic member 3 during extension, compression and swing.

Further, with reference to FIG. 1 and FIG. 2, the adjustment and lockout mechanism 5 includes a tension element 51 and a lock support 52, the tension element 51 is connected to the adjustable end 32 of the elastic member 3, and the tension element 51 may have a movable range, over which it pulls the adjustable end 32 of the elastic member 3 to move. The lock support 52 is disposed on the supporting portion of main body 1 and configured to lock the position of the tension element 51.

The tension element 51 is configured to pull the adjustable end 32 of the elastic member 3 to change the tension degree of the elastic member 3, and the tension element 51 is locked by the lock support 52 to maintain the position of the adjustable end 32 of the elastic member 3, thereby adjusting and maintaining the tension degree of the elastic member 3, adjusting the magnitude of the tensile force of the elastic member 3 on the connecting member 4, and thus adjusting the magnitude of the assistance of the power-assisted arm.

Further, with reference to FIG. 2, the lock support 52 includes a support base 521 and at least one movable part 522, the support base 521 is fixedly mounted on the supporting portion of main body 1, the movable part 522 is rotatably mounted on the support base 521, and the movable part 522 has an end surface 523 configured to cooperate with the support base 521 to clamp the tension element 51. The tension element 51 is inserted between the movable part 522 and the support base 521. When the movable part 522 is rotated, the end surface 523 thereof presses the tension element 51 against the support base 521, so as to lock the tension element 51.

Additionally, the hollow rod body 11 is formed with a throughhole 15 in communication with the first chamber 13 at the support base 521. An end of the tension element 51 away from the elastic member 3 passes through the throughhole 15 and extends outwards of the lock support 52, so as to be pulled by a human hand to adjust the position of the adjustable end 32 of the elastic member 3.

When it is necessary to increase the assistance, the movable part 522 is rotated, such that the end surface 523 thereof moves away from the support base 521, to release the tension element 51, and the tension element 51 is manually pulled to move the adjustable end 32 of the elastic member 3, so that the adjustable end 32 of the elastic member 3 is away from the movable end 31 of the elastic member 3. After the adjustable end 32 of the elastic member 3 is adjusted to be located at an appropriate position, the movable part 522 is rotated, such that the end surface 523 may clamp the tension element 51 in combination with the support base 521, thereby holding the adjustable end 32 of the elastic member 3, and thus tensioning the elastic member 3 and increasing the assistance of the elastic member 3.

When it is necessary to decrease the assistance, the movable part 522 is rotated, such that the end surface 523 moves away from the support base 521 to release the tension element 51, so as to quickly release the assistance, at this moment, the elastic member 3 resets under its own elastic force and pulls the tension element 51 to move, and when the adjustable end 32 of the elastic member 3 returns back to the required position, the movable part 522 is rotated again to lock the tension element 51.

Preferably, the end surface 523 of the movable part 522 is formed with a plurality of protrusions. Be means of the protrusions, the frictional force between the end surface 523 and the tension element 51 may be increased, thereby improving the locking effect.

In the present embodiment, the tension element 51 is preferably a flexible drag rope. The flexible drag rope is convenient and quick to implement, which reduces the arrangement difficulty of the tension element 51, thereby facilitating the assembly of the overall structure.

In addition, in order to facilitate the connection between the elastic member 3 and the tension element 51, a connecting block 7 is provided at the joint between the elastic member 3 and the tension element 51, and the ends A, B of the band body of the elastic member 3 and the tension element 51 are all fixed on the connecting block 7.

Further, with reference to FIG. 2, the hollow rod body 11 includes a first rod body 111 and a second rod body 112, the support base 521 is sleeved over the ends of the first rod body 111 and the second rod body 112 close to each other to coaxially connect the first rod body 111 and the second rod body 112. The first chamber 13 is defined at the first rod body 111, and the throughhole 15 is formed by a gap between the first rod body 111 and the second rod body 112. The split design facilitates the assembly of the elastic member 3 and the tension element 51 so, that the tension element 51 may be firstly pulled out of the first rod body 111 and pass through the support base 521, then the first rod body 111 and the second rod body 112 are connected, so as to reduce the assembly difficulty and improve the assembly efficiency. However, in other embodiments, the first rod body 111 and the second rod body 112 may also be integrally formed, the rod body is provided with the throughhole 15, and the tension element 51 may be pulled out of the throughhole 15 during assembly.

Further, with reference to FIG. 2, an outer sidewall of the second rod body 112 is provided with a limit block 16, the limit block 16 is configured with a L-shaped limit hole 17 for the tension element 51 to pass through, and an inner wall and an orifice of the limit hole 17 are both configured as arc-shaped surfaces. A sidewall of the limit hole 17 limits the movement path of the tension element 51, thereby ensuring that a part of the movement path of the tension element 51 in the support base 521 is kept stable, and thus improving the precision of fit between the tension element 51 and the support base 521.

Preferably, the limit block 16 is close to the waist of the human body, so that the human hand may grasp and pull the tension element 51. Furthermore, the wearer may directly adjust the magnitude of the assistance without removing/taking off the power-assisted arm by utilizing the tension element 51, thereby simplifying the adjustment step for assistance, and thus further improving the convenience of the assistance adjustment.

The implementation principle of the passive power-assisted arm disclosed in the embodiment of the present application is as follows. After the tension element 51 is unlocked by the lock support 52, the tension element 51 is dragged to move the adjustable end 32 of the elastic member 3 in the first chamber 13 to tension the elastic member 3, and then the tension element 51 is locked by the lock support 52 to increase and then maintain the elastic force of the elastic member 3, thereby increasing the assistance. And when it is necessary to decrease the assistance, it is merely necessary to unlock the lock support 52, such that the tension element 51 automatically resets under the elastic force of the elastic member 3, and the tension element 51 is locked again by the lock support 52 when the tension element 51 is adjusted to be located at the appropriate position. The adjustment of the magnitude of the assistance may be achieved by the tension element 51 in combination with the lock support 52, and the adjustment process is simple, convenient and quick.

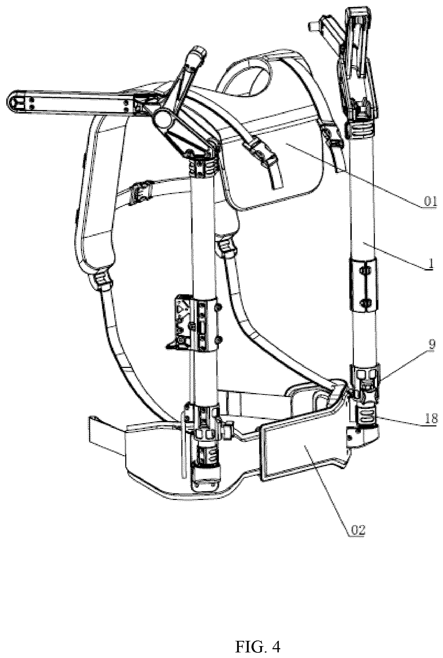

An embodiment of the present application further discloses a wearable device. With reference to FIG. 4, the wearable device includes at least one passive power-assisted arm described above, and further includes a waistband 02 and a backband 01 connected to each other. The two ends of the supporting portion of main body 1 are respectively connected to the waistband 02 and the backband 01, the backband 01 is worn at a shoulder of a human body, and the waistband 02 is wrapped around a waist of the human body, so as to wear the power-assisted arm on the body. In the present embodiment, the wearable device includes two passive power-assisted arms described above, and the two passive power-assisted arms are respectively used for providing assistance to arms on two sides.

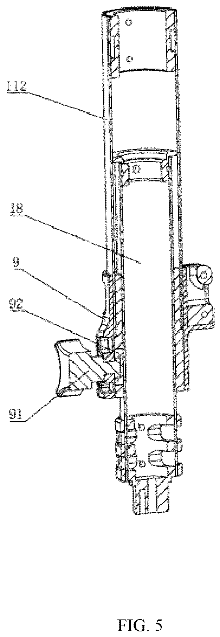

Specifically, with reference to FIG. 4 and FIG. 5, one end of the second rod body 112 away from the first rod body 111 is provided with an adjustment bracket 9, and the second rod body 112 is inserted into the adjustment bracket 9 and fixed by a bolt. The extension rod 18 slidably extends through the adjustment bracket 9, the extension rod 18 is arranged coaxially with the second rod body 112, one end of the extension rod 18 is fixed to the waistband 02, and the other end of the extension rod 18 passes through the adjustment bracket 9 and is inserted into the second rod body 112. By adjusting the length of the extension rod 18 outside the second rod body 112, the distance between the rotary swing arm 2 and the waistband 02 may be adjusted to match wearers with different physique, thereby improving the adaptability of the wearable device.

Additionally, a lock screw 91 is in threaded connection with the adjustment bracket 9, the lock screw 91 is arranged along a radial direction of the extension rod 18. One end of the lock screw 91 close to the extension rod 18 is provided with a lock block 92, and one side of the lock block 92 away from the lock screw 91 abuts against a surface of the extension rod 18. The lock screw 91 is rotated to move the lock screw 91 along the radial direction of the extension rod 18, so as to adjust the distance between the lock block 92 and the extension rod 18, to lock or loosen the extension rod 18, so as to adjust or fix the position of the extension rod 18.

The implementation principle of the wearable device disclosed in the embodiment of the present application is as follows.

The lock screw 91 is rotated to move the lock screw 91 to be away from the extension rod 18, so as to achieve an unlocking. The extension length of the extension rod 18 is changed according to the body size of the wearer to adjust the position of the rotary swing arm 2 relative to the shoulder, thereby ensuring that the hinge point of the connecting member 4 is close to the shoulder joint of the wearer, to improve the adaptability of the power-assisted arm, and thus improving the power-assisted effect.

The foregoing is all preferred embodiments of the present application, and does not limit the scope of protection of the present application on this basis. Therefore, all equivalent variations made based on a structure, shape and principle of the present application shall fall within the scope of protection of the present application.

### List of Reference numerals

01 backband
02 waistband
1 supporting portion of main body
11 hollow rod body
111 first rod body
112 second rod body
12 extension plate
13 first chamber
14 opening
15 throughhole
16 limit block
17 limit hole
18 extension rod
19 mounting plate
2 rotary swing arm
3 elastic member
31 movable end
32 adjustable end
4 connecting member
41 fixed end
42 end subjected to elastic force
43 clearance
5 adjustment and lockout mechanism
51 tension element
52 lock support
521 support base
522 movable part
523 end surface
6 roller for installation
7 connecting block
8 limit roller
9 adjustment bracket
91 lock screw
92 lock block

## Claims

1. A passive power-assisted arm, **characterized by** comprising:
a supporting portion of main body (1);
a connecting member (4) rotationally mounted at the supporting portion of main body (1), wherein the connecting member at least comprises a fixed end (41) and an end subjected to elastic force (42);
a rotary swing arm (2) fixed at the fixed end (41);
an elastic member (3), wherein a movable end (31) of the elastic member (3) is connected with the end subjected to elastic force (42) and is configured to pull the rotary swing arm (2) to rotate, and an adjustable end (32) of the elastic member (3) is movably provided at the supporting portion of main body (1); and
an adjustment and lockout mechanism (5) on the supporting portion of main body (1), wherein the adjustment and lockout mechanism is configured to adjust and lock a position of the adjustable end (32) of the elastic member (3) on the supporting portion of main body (1) to adjust a magnitude of assistance.

2. The passive power-assisted arm according to claim 1, **characterized in that** the adjustment and lockout mechanism (5) comprises a tension element (51) and a lock support (52), wherein the tension element (51) is connected with the adjustable end (32) of the elastic member (3), the tension element (51) has a movable range, over which it pulls the adjustable end (32) of the elastic member (3) to move, so as to move the adjustable end (32) of the elastic member (3) to be away from the movable end (31) of the elastic member (3), and the lock support (52) is configured to lock a position of the tension element (51).

3. The passive power-assisted arm according to claim 2, **characterized in that** the tension element (51) is a flexible drag rope.

4. The passive power-assisted arm according to claim 2, **characterized in that** the lock support (52) comprises a support base (521) and at least one movable part (522), wherein the support base (521) is mounted on the supporting portion of main body (1), the movable part (522) is movably arranged on the support base (521), and the movable part (522) has at least one end surface (523) configured to clamp the tension element (51) in combination with the support base (521).

5. The passive power-assisted arm according to claim 4, **characterized in that** the end surface (523) is formed with a plurality of protrusions.

6. The passive power-assisted arm according to claim 1, **characterized in that** the supporting portion of main body (1) is formed with a first chamber (13), wherein the adjustable end (32) of the elastic member (3) is disposed in the first chamber (13), an end of the supporting portion of main body (1) close to the connecting member (4) is formed with an opening (14), the opening (14) is in communication with the first chamber (13), and the movable end (31) of the elastic member (3) protrudes out of the opening (14) to be connected with the end subjected to elastic force (42).

7. The passive power-assisted arm according to claim 3, **characterized in that** the supporting portion of main body (1) is formed with a first chamber (13), wherein the adjustable end (32) of the elastic member (3) is disposed in the first chamber (13), an end of the supporting portion of main body (1) close to the connecting member (4) is formed with an opening (14), the opening (14) is in communication with the first chamber (13), the movable end (31) of the elastic member (3) protrudes out of the opening (14) to be connected with the end subjected to elastic force (42), the supporting portion of main body (1) is formed with a throughhole (15), and the throughhole (15) is in communication with the first chamber (13), such that the tension element (51) protrudes out of the first chamber (13).

8. The passive power-assisted arm according to claim 1, **characterized in that** the supporting portion of main body (1) is rotatably provided with at least one limit roller (8) at the opening (14), wherein when the movable end (31) of the elastic member (3) deviates from the supporting portion of main body (1), the elastic member (3) abuts against an outer circumference of the limit roller (8).

9. A wearable device, comprising a waistband (02) and a backband (01), wherein the backband (01) is connected with the waistband (02), the backband (01) is configured to be worn at a shoulder of a human body while the waistband (02) is configured to be wrapped around a waist of the human body, **characterized by** comprising the passive power-assisted arm according to claim 1, and further comprising an extension rod (18) and an adjustment bracket (9), wherein the adjustment bracket (9) is fixed at the supporting portion of main body (1), the extension rod (18) extends through the adjustment bracket (9), wherein one end of the extension rod (18) is fixed at the waistband (02) while the other end thereof is inserted into the supporting portion of main body (1), the adjustment bracket (9) is provided with a lock screw (91) for locking a position of the extension rod (18), and an end of the supporting portion of main body (1) away from the extension rod (18) is fixed at the backband (01).

10. The wearable device according to claim 9, **characterized in that** an end of the lock screw (91) close to the extension rod (18) is provided with a lock block (92), wherein the lock block (92) abuts against the extension rod (18), and the lock screw (91) is configured to move the lock block (92) to be close to or away from the extension rod (18).
